# EUROPÄISCHE PATENTSCHRIFT

(11) **EP 0 946 336 B1**
(45) Veröffentlichungstag und Bekanntmachung des Hinweises auf die Patenterteilung: **15.05.2002**
(21) Anmeldenummer: 97945877.5
(22) Anmeldetag: 29.10.1997
(51) Int. Cl.: B25B 23/14, B23P 19/06

(54) **KRAFTSCHRAUBER**
POWER WRENCH
VISSEUSE

(30) Priorität: 19.11.1996 DE 19647813
(43) Veröffentlichungstag der Anmeldung: 06.10.1999
(60) Teilanmeldung: 02002313.1
(73) Patentinhaber: Hohmann, Jörg, 59872 Meschede (DE); Hohmann, Frank, 59581 Warstein (DE)
(72) Erfinder: Hohmann, Jörg, 59872 Meschede (DE); Hohmann, Frank, 59581 Warstein (DE)
(74) Vertreter: Rehders, Jochen
(86) Internationale Anmeldenummer: EP9705974
(87) Internationale Veröffentlichungsnummer: WO9822263

(56) Entgegenhaltungen:
- DE-A- 3 318 910
- DE-A- 3 327 964
- DE-A- 4 307 131
- US-A- 4 375 121
- US-A- 4 418 765
- PATENT ABSTRACTS OF JAPAN vol. 18, no. 502 (M-1676), 20.September 1994 & JP 06 170662 A (NITTO SEIKO CO LTD), 21.Juni 1994,
- PATENT ABSTRACTS OF JAPAN vol. 16, no. 464 (M-1316), 28.September 1992 & JP 04 164578 A (MATSUSHITA ELECTRIC WORKS LTD), 10.Juni 1992,

## Beschreibung

Die Erfindung betrifft einen Kraftschrauber mit einer Antriebseinheit, einer Eingabeelektronik, einer Abtasteinrichtung für das Ist-Drehmoment, einer Abtasteinrichtung für den Ist-Schraubenspannwinkel und einer Steuer- und Abschalteinrichtung zum Steuern des Weiterdrehens der Antriebseinheit bei Übereinstimmung des Ist-Drehmoments mit einem Soll-Drehmoment und zum Abschalten der Antriebseinheit bei Übereinstimmung des Ist-Schraubenspannwinkels mit dem Soll-Schraubenspannwinkel, wobei das Soll-Drehmoment, von dem ab das Weiterdrehen der Antriebseinheit bis Erreichen des Soll-Schraubenspannwinkels gesteuert wird, auf einen Wert, der kleiner als das der Soll-Vorspannkraft entsprechende Drehmoment ist, eingestellt wird und ein Weiterdrehwinkel der Antriebseinheit bis Erreichen des der Soll-Vorspannkraft entsprechenden Soll-Schraubenspannwinkels zum Abschalten der Antriebseinheit dient.

Ein derartiger Kraftschrauber ist. in der deutschen Patentschrift 43 07 131 beschrieben, der ein der Antriebseinheit nachgeschaltetes Planetengetriebe, eine Drehmomenterfassung an einer Abtriebswelle, mit eine Auswerteelektronik, eine Abschalteinrichtung für die Antriebseinheit und eine Abtasteinrichtung zum Erfassen der Drehstellung der Antriebseinheit umfaßt, wobei die Abschalteinrichtung eine einstellbare Vorgabeeinrichtung für ein bestimmtes, mit der Drehmomenterfassung ermitteltes Drehmoment und zusätzlich eine einstellbare Vorgabeeinrichtung für einen bestimmten, mit der Drehstellungserfassung ermittelten Nachlaufweg umfaßt und ein Abschalten der Antriebseinheit nach dem Erreichen des eingestellten Drehmoments und einem anschließenden Weiterdrehen um einen eingestellten Nachlaufweg bewirkt.

Vor einem Schraubvorgang werden das erforderliche Drehmoment sowie ein ggf. erforderlicher Nachlaufweg an den entsprechenden Einstellelementen eingestellt. Dann wird der Kraftschrauber auf die Verschraubung aufgesteckt und ein Stützfuß gegen eine feste Abstützung bewegt. Nach dem Start der Antriebseinheit wird der Schraubvorgang ausgeführt und die Verschraubung angezogen, wodurch das Drehmoment ansteigt. Der meßtechnisch erfaßte Drehmomentwert wird mit dem durch die Einstellung vorgegebenen Drehmomentwert verglichen un d bei Übereinstimmung beider Werte erfolgt ein internes Umschaltsignal für die Nachlaufsteuerung. Ausgehend von der gerade aktuellen Drehstellung wird nun die Antriebseinheit um den eingestellten Nachlaufweg weitergedreht. Nach dem Durchlaufen des eingestellten Nachlaufwegs wird über eine Abschalteinrichtung ein Schaltsignal zum Ausschalten der Antriebseinheit und damit zur Beendigung des Schraubvorgangs abgegeben.

Bei dem bekannten Kraftschrauber muß die Bedienungsperson anhand von Tabellen mit Bezug auf die Schraubengröße und die Materialgüte das erforderliche Soll-Drehmoment ermitteln und in die Eingabeelektronik eingeben. Auch der Nachlaufweg muß zunächst von der Bedienungsperson ermittelt werden, um dann ebenfalls in die Eingabeelektronik eingegeben zu werden. Welche Funktion der Nachlaufweg hat und wie dieser ermittelt wird, ist in der deutschen Patentschrift 43 07 131 nicht angegeben. Auch ist der meßtechnisch erfaßbare Drehmomentwert stark von äußeren Umständen wie Gewindereibung und dergleichen abhängig und kein genaues Maß für die tatsächlich erreichte Schraubenvorspannung.

Aus der DE-A-33 18 910 ist des weiteren eine mit einem Kraftschrauber gekoppelte Einrichtung bekannt, mit der die Schraubengröße, die Materialgüte und die Gewindesteigung einer Schraube zur Vermeidung von Eingabefehlern durch Abtasten der Schraube ermittelt werden, wobei eine Auswerteelektronik daraus eine Soll-Drehmoment ermittelt.

Der Erfindung liegt das Problem zugrunde, die Bedienung eines Kraftschraubers der eingangs erwähnten Art zu vereinfachen und Bedienungsfehler möglichst auszuschalten, ohne daß besondere Anforderungen an die Fachkenntnisse der Bedienungsperson gestellt werden. Des weiteren sollen Schäden an den anzuziehenden Schrauben und am Kraftschrauber vermieden, die Genauigkeit, mit der das Anziehen der Schrauben bewirkt wird, erhöht, die Auswirkung der Rotationsenergie der Antriebseinheit beim Abschalten auf das Anziehen der Schraube vermindert oder beseitigt und eine sichere Übertragung der Meß- und Steuersignale gewährleistet werden.

Ausgehend von dieser Problemstellung wird bei einem Kraftschrauber der eingangs erwähnten Art vorgeschlagen, daß die Eingabeelektronik erfindungsgemäß zum Eingeben der Schraubengröße, der Materialgüte, der Gewindesteigung und der Klemmlänge eingerichtet ist. daß eine Auswerteelek tronik vorgesehen ist, die zum Ermitteln der Soll- Vorspannkraft aus der eingegebenen Schraubengröße, der Materialgüte und der Klemmlänge, zum Ermitteln des aus der Soll-Vorspannkraft und der Gewindesteigung resultierenden Soll-Drehmoments und zum Ermitteln des aus der Soll-Vorspannkraft und der Gewindesteigung resultierenden Soll-Schraubenspannwinkels eingerichtet ist und daß der Weiterdrehwinkel der Antriebseinheit aus der Differenz zwischen dem Soll-Schraubenspannwinkel und dem dem eingestellten Soll-Drehmoment entsprechenden Schraubenspannwinkel ermittelt wird.

Die Bedienungsperson braucht somit nicht mehr anhand von Tabellen das Soll-Drehmoment für eine bestimmte Schraubengröße und Gewindesteigung mit einer bestimmten Materialgüte ermitteln und in die Eingabeelektronik eingeben, sondern es genügt, die Schraubengröße. die Gewindesteigung und die Materialgute direkt in die Eingabeelektronik einzugeben, woraufhin das sich daraus ergebende Soll-Drehmoment durch die Auswerteelektronik festgelegt wird und zum Steuern des Kraftschraubers dient. Fehleinstellungen, die zu Schäden an den anzuziehenden Schrauben und am Kraftschrauber führen können, werden vermieden, da keine besonderen Fachkenntnisse der Bedienungsperson erforderlich sind.

Die erfindungsgemäße Steuerung für den Kraftschrauber geht von der Überlegung aus, daß sich die genaueste Einstellung der Schraubenvorspannkraft aus der Überwachung der Schraubendehnung ergibt, da die Schraubendehnung aufgrund des "Hook'schen Gesetzes" in einer linearen Beziehung zur Vorspannkraft, dem Schraubenquerschnitt, der Einspannlänge und dem Elastizitätmodul steht. Diese Schraubendehnung ist aus geometrischen Gründen direkt proportional zum Schraubenspannwinkel, jedoch läßt sich der Nullwert der Dehnung aus der Schraubendrehung nicht direkt ermitteln, da die Schraube zunächst mit geringem Drehmoment bis zur festen Anlage der zu spannenden Teile, dem Fügepunkt, gedreht wird und erst dann der lineare Anstieg der Vorspannkraft mit der Schraubendehnung einsetzt. Rechnerisch lassen sich indessen die Soll-Vorspannkraft aus der eingegebenen Schraubengröße, der Materialgüte und der Klemmlänge ermitteln und daraus in Verbindung mit der eingegebenen Gewindesteigung das Soll-Drehmoment und der resultierende Schraubenspannwinkel ermitteln. Es genügt daher, zunächst das Ist-Drehmoment bis zu einer vorgebbaren Höhe zu messen und die Steuer- und Abschalteinrichtung so auf den Kraftschrauber einwirken zu lassen, daß von diesem Punkt an das Weiterdrehen der Antriebseinheit um einen bestimmten Winkel, der zu der gewünschten Soll-Vorspannkraft führt, erfolgt.

Vorzugsweise kann das Soll-Drehmoment, von dem ab das Weiterdrehen der Antriebseinheit bis Erreichen des Soll-Schraubenspannwinkels gesteuert wird, auf einen Wert, der kleiner als das der Soll-Vorspannkraft entsprechende Drehmoment ist, eingestellt sein und wird der Weiterdrehwinkel der Antriebseinheit bis Erreichen des der Soll-Vorspannkraft entsprechenden Soll-Schraubenspannwinkel aus der Differenz zwischen dem Soll-Schraubenspannwinkel und dem dem eingestellten Soll-Drehmoment entsprechenden Schraubenspannwinkel ermittelt und dient zum Abschalten der Antriebseinheit.

Besonders bevorzugt ist, daß das Soll-Drehmoment auf 10 % bis 20 % des der Soll-Vorspannkraft entsprechenden Drehmoments eingestellt wird und sich der Weiterdrehwinkel auf 90 % bis 80 % des der Soll-Vorspannkraft entsprechenden Soll-Schraubenspannwinkel beläuft.

Die Erfahrung hat gezeigt, daß nach Erreichen von 10 % bis 20 % des der Soll-Vorspannkraft entsprechenden Drehmoments der lineare Bereich der Schraubendehnung erreicht ist, so daß der Weiterdrehwinkel auf 90 % bis 80 % des der Soll-Vorspannkraft entsprechenden Soll-Schraubenspannwinkel eingestellt werden kann und zu einem sehr genauen Spannen der Schrauben mit der gewollten Vorspannkraft führt, da die Ungenauigkeiten während der Anfangsphase des Spannens der Schraube nur geringfügig in die Endvorspannkraft eingehen.

Ausgehend von der eingangs erwähnten Problemstellung wird des weiteren bei dem erfindungsgemäßen Kraftschrauber vorgeschlagen, den Einfluß der Rotationsenergie der sich drehenden Teile auf die Schraubenvorspannkraft zu verringern oder auszuschalten und die Steuer- und Abschalteinrichtung zum stetigen Herabsetzen der Drehzahl der Antriebseinheit bei kleiner werdender Differenz zu dem Soll-Drehmoment und dem Ist-Drehmoment oder zwischen dem Soll-Schraubenspannwinkel und dem Ist-Schraubenspannwinkel und zum Abschalten der Antriebseinheit bei Übereinstimmung des 1st-Drehmoments mit dem Soll-Drehmoment oder des Ist-Schraubenspannwinkels mit dem Soll-Schraubenspannwinkel einzurichten. Das Herabsetzen der Drehzahl kann sofort mit dem Ansteigen des Schraubmoments einsetzen. es ist jedoch auch möglich, den Schraubvorgang zunächst mit hoher Drehzahl durchzuführen und erst nach Erreichen eines vorgegebenen Schraubmoments das Herabsetzen der Drehzahl einsetzen zu lassen. Hierdurch ergibt sich eine Verkürzung des Schraubvorgangs.

Die Steuer- und Abschalteinrichtung zum Steuern der Drehzahl der Antriebseinheit bewirkt, daß die Rotationsenergie des Kraftschraubers bei Annäherung an die Soll-Werte immer geringer wird und daher diese Rotationsenergie im Moment des Abschaltens gleich oder annähernd gleich Null ist und sich nicht auf die Ist-Vorspannkraft auswirken kann.

Diese Steuerung der Drehzahl läßt sich bei jedem Kraftschrauber mit elektronischer Drehmomentbegrenzung aber auch bei einem Kraftschrauber bei dem die Steuer- und Abschalteinrichtung eine elektronische Schraubenspannwinkelbegrenzung aufweist, in Verbindung mit der erfindungsgemäß ausgebildeten Eingabeelektronik zum Eingeben der Schraubengröße, der Materialgüte, der Gewindesteigung und der Klemmlänge, einsetzen.

Vorteilhaft kann es auch sein, an einem Kraftschrauber der vorerwähnten Art die Abtasteinrichtung für das Ist-Drehmoment so einzurichten, daß sie das Ist-Drehmoment einer bereits eingeschraubten Schraube durch geringfügiges Weiterdrehen mißt und die Auswerteelektronik daraus ein Soll-Drehmoment und/oder einen Soll-Schraubenspannwinkel für ein weiteres Ausziehen der Schraube auf einen den eingegebenen Daten entsprechenden Wert bewirkt.

Im Hinblick auf die Platzverhältnisse im Gehäuse des Kraftschraubers ist es vorteilhaft, wenn wenigstens die Steuer- und Abschalteinrichtung ggf. auch die Auswerteelektronik in die Antriebseinheit integriert sind, während die Eingabeelektronik und ggf. die Auswerteelektronik als unabhängiges Steuergerät ausgebildet sind und auf die Steuer- und Abschalteinrichtung oder auf die Auswerteelektronik kabelfrei mit bidirektionaler oder unidirektionaler Übertragung der Daten wirken. Zu diesem Zweck kann die Fernübertragung als uni- oder bidirektionale Infrarotstrecke gestaltet sein und ein entsprechender Infrarotsignalempfänger an der Antriebseinheit angeordnet sein.

Insbesondere wenn die Steuer- und Abschalteinrichtung in die Antriebseinheit integriert ist, während die Eingabeelektronik und die Auswerteelektronik als unabhängiges Steuergerät ausgebildet sind, können diese in einem tragbaren Rechner zusammengefaßt sein, der eine bidirektionale IrDA-Schnittstelle mit Infrarotübertragung aufweist, während eine entsprechende Schnittstelle an der Antriebseinheit angeordnet ist.

Unidirektionale Infrarotdatenübertragungseinrichtungen sind als Infrarotfernbedienung für Fernsehgeräte bekannt. Sie ermöglichen eine unidirektionale Datenübertragung über Entfernungen bis zu 36 m unter optimalen Bedingungen. Bei diesen unidirektionalen Infrarotdatenübertragungssystemen ist der Ruhestrom des Senders fast gleich Null, während der Strom während des Sendens nur einige Milliampere beträgt. Der Empfänger hat ebenfalls nur eine Stromaufnahme von einigen Milliampere, d. h. in einem Bereich, der für die bei den tragbaren Kraftschraubern üblichen Stromversorgungen zulässig ist.

Tragbare Rechner sind häufig bereits mit einer IrDA-Schnittstelle ausgestattet. Hierbei handelt es sich um eine standardisierte, bidirektionale Schnittstelle mit Infrarotübertragung. Eine entsprechende Schnittstelle ist am Kraftschrauber angeordnet und diese IrDA-Baugruppen weisen einen geringen Stromverbrauch von einigen Mikroampere im Ruhezustand und einigen Milliampere im aktiven Zustand auf.

Vorteilhaft sind bei allen Infrarotübertragungssystemen die prinzipbedingte optimale galvanische Trennung sowie die geringen Kosten der Standardbauteile. Auch ergeben sich keinerlei Beeinträchtigungen durch die Abstrahlung von Störsignalen oder durch Beeinflussung durch Störsignale. Bei Verwendung von standardisierten IrDA-Baugruppen lassen sich zur Sicherung der übertragenen Daten Prüfbits mitsenden. Des weiteren ist ein tragbarer Rechner, der mit dem Kraftschrauber nur über die bidirektionale Infrarot-Schnittstelle verbunden ist, geeignet, große Datenmengen zu verarbeiten und somit eine große Anzahl von Schraubvorgängen statistisch auszuwerten und zu dokumentieren.

Wenn die Eingabeelektronik ein Display aufweist, läßt sie sich so einrichten, daß auf dem Display die eingegebenen Werte, die daraus ermittelten Soll-Werte, und/oder der aktuelle Ist-Drehmomentlauf und/oder der aktuelle Ist-Schraubendrehwinkelverlauf dargestellt werden.

Die Erfindung wird nachstehend anhand eines in der Zeichnung dargestellten Ausftihrungsbeispiels des näheren erläutert. In der Zeichnung zeigen:
- Fig. 1: eine schematische Darstellung eines Kraftschraubers und der elektronischen Steuerelemente und
- Fig. 2: eine graphische Darstellung des Verlaufs des Drehmoments M, der Vorspannkraft F und der Drehzahl n in Abhängigkeit vom Schraubenspannwinkel.

Ein allgemein mit der Bezugsziffer 1 bezeichneter Kraftschrauber weist eine Antriebseinheit 2 auf, die hier als elektrische Antriebseinheit dargestellt ist, die jedoch auch pneumatisch oder hydraulisch betrieben sein kann. An die Antriebseinheit 2 ist ein Planetengetriebe 3 angesetzt, das wie dargestellt, einen Winkeltrieb aufweisen kann, das sich jedoch auch koaxial zur Hauptdrehachse der Antriebseinheit erstrecken kann. Das Planetengetriebe 3 dient zum Herabsetzen der Drehzahl der Antriebseinheit 2 und zum Erhöhen des erzielbaren Drehmoments.

An einem Hals des Planetengetriebes 3 im Bereich einer als Vierkant 5 ausgebildeten Ausgangswelle des Planetengetriebes 3 ist ein Stützfuß 4 drehfest angeordnet, der sich beim Anziehen einer Schraube gegen eine feste Abstützung bewegt und auf diese Weise das Reaktionsmoment aufnimmt. Der Vierkant 5 dient zum Aufstecken einer Schlüsselnuß.

Zu der Antriebseinheit 2 gehört eine Eingabeelektronik 6, die eine Tastatur 7 und ggf. ein Display 8 zur Anzeige der Eingaben, aufweist. In diese Eingabeelektronik 6 lassen sich die Schraubengröße, die Materialgüte, die Gewindesteigung, die Klemmlänge eingeben und ebenfalls auf dem Display 8 anzeigen. Diese Werte werden an eine Auswerteelektronik 9 weitergeleitet, die aus der eingegebenen Schraubengröße und der Materialgüte ein Soll-Drehmoment oder aus der Schraubengröße, der Materialgüte und der Klemmlänge eine Soll-Vorspannkraft und daraus unter Einbeziehung der Gewindesteigung ein resultierendes Soll-Drehmoment und schließlich aus der Soll-Vorspannkraft und der Gewindesteigung einen resultierenden Schraubenspannwinkel ermittelt. Diese ermittelten Soll-Werte und/oder der aktuelle Ist-Drehmomentverlauf und/oder der aktuelle Ist-Schraubendrehwinkelverlauf lassen sich ebenfalls auf dem Display 8 anzeigen.

Mit dem Planetengetriebe 3 wirken eine Abtasteinrichtung 10 für das Ist-Drehmoment und eine Abtasteinrichtung 11 für den Ist-Schraubenspannwinkel zusammen. Bei diesen Abtasteinrichtungen 10, 11 kann es sich um übliche, berührungslose Abtasteinrichtungen, wie sie z. B. in der deutschen Patentschrift 43 07 131 beschrieben sind, handeln.

Die Meßwerte der Abtasteinrichtung 10, 11 werden an eine Steuer- und Abschalteinrichtung 12 geleitet, die auf die Antriebseinheit 2 wirkt.

Vorzugsweise sind die Abtasteinrichtungen 10, 11 und die Steuer- und Abschalteinrichtung 12 und ggf. die Auswerteelektronik 9 in die Antriebseinheit 2 integriert, während die Eingabeelektronik 6 und ggf. die Auswerteelektronik 9 von dem Kraftschrauber 1 unabhängig als Steuergerät ausgebildet sein und mit dem Kraftschrauber 1 über ein Kabel verbunden sein kann, oder besonders bevorzugt kabelfrei mit Fernübertragung der Daten auf die in den Kraftschrauber 1 integrierte Elektronik wirkt. Wenn hierzu eine Infrarotfernübertragung verwendet wird, lassen sich die in die Eingabeelektronik 6 eingegebenen Daten oder die in der Auswerteelektronik 9 umgewandelten Steuerdaten kabelfrei zum Kraftschrauber 1 übertragen. Wenn die Eingabeelektronik 6 und die Auswerteelektronik 9 zu einem tragbaren Rechner zusammengefaßt sind und dieser mit einer sog.
IrDA-Schnittstelle 13 als Fernübertragung ausgestattet ist, können die Infrarotsignale von dieser Schnittstelle auf eine entsprechende Schnittstelle 14 am Kraftschrauber 1, die mit der Steuer- und Abschalteinrichtung 12 in Verbindung steht, übertragen werden. Diese IrDA-Schnittstelle 13 und die entsprechende Schnittstelle 14 sind als standardisierte bidirektionale Schnittstellen mit Infrarotübertragung für Entfernungen bis zu einem Meter und Übertragungsraten von mehr als 1MBit/S ausgelegt. Diese IrDA-Baugruppen 13, 14 haben im Ruhezustand einen geringen Stromverbrauch von einigen Mikroampere und im aktiven Zustand einen solchen von einigen Milliampere, der in einem Bereich liegt, der für die bei tragbaren Kraftschraubern üblichen Stromversorgungen zulässig ist. Besonders vorteilhaft ist bei diesem Infrarotübertragungssystem die prinzipbedingte, optimale galvanische Trennung der Eingabeelektronik 6 und der Auswerteelektronik 9 vom Kraftschrauber 1 und die geringen Kosten durch die Verwendung von Standardbauteilen. Diese Standardbauteile weisen so geringe Abmessungen auf, daß sie sich problemlos in das Gehäuse des Kraftschraubers 1 integrieren lassen.

Wenn nur die Eingabeelektronik 6 unabhängig vom Kraftschrauber 1 ausgebildet ist, ist eine bidirektionale Datenübertragung nicht erforderlich, so daß in diesem Fall auch die Möglichkeit besteht, die für Fernsehgeräte bekannten Infrarotfernbedienungen für eine unidirektionale Fernübertragung der Daten zu verwenden. Auch diese Infrarotfernbedienungen weisen einen sehr geringen Ruhestrom auf, während im aktiven Zustand der Stromverbrauch bei einigen Milliampere liegt.

Soll der erfindungsgemäße Kraftschrauber 1 nur mit einer Drehmomentbegrenzung arbeiten, braucht nur die Schraubengröße und die Materialgüte in die Eingabeelektronik 6 eingegeben zu werden, so daß die Auswerteelektronik 9 das entsprechende Soll-Drehmoment ermittelt. Während des Anziehens der Schraube mißt die Abtasteinrichtung 10 das Ist-Drehmoment, und die Steuer- und Abschalteinrichtung 12 schaltet die Antriebseinheit 2 bei Übereinstimmung des Ist-Drehmoments mit dem Soll-Drehmoment ab.

Wird ein hochgenaues Anziehen der Schraube auf eine Soll-Vorspannkraft gefordert, die sich aus der Schraubengröße, der Materialgüte und der Klemmlänge ermitteln läßt, zu der die Schraubendehnung proportional ist, werden in die Eingabeelektronik 6 die Schraubengröße, die Materialgüte, die Gewindesteigung und die Klemmlänge eingegeben, woraus die Auswerteelektronik 9 eine Soll-Vorspannkraft, ein Soll-Drehmoment und einen Soll-Schraubenspannwinkel ermittelt.

Beim Spannen der Schraube werden mittels der Abtasteinrichtung 10 das Ist-Drehmoment und mittels der Abtasteinrichtung 11 der Ist-Schraubenspannwinkel ermittelt und der Steuer- und Abschalteinrichtung 12 zugeleitet. Die Steuer- und Abschalteinrichtung 12 ist so eingerichtet, daß sie das Weiterdrehen der Antriebseinheit um einen bestimmten Winkel bei Übereinstimmung des Ist-Drehmoments mit dem Soll-Drehmoment bewirkt und die Antriebseinheit 2 abschaltet, wenn der Ist-Schraubenspannwinkel mit dem Soll-Spannwinkel übereinstimmt. Dieses Soll-Drehmoment, von dem ab das Weiterdrehen der Antriebseinheit 2 bis Erreichen des Soll-Schraubenspannwinkels gesteuert wird, ist kleiner als das der Soll-Vorspannkraft entsprechende Drehmoment, vorzugsweise entspricht es 10 % bis 20 % des der Soll-Vorspannkraft entsprechenden Drehmoments, während sich der Weiterdrehwinkel dann auf 90 % bis 80 % des der Soll-Vorspannkraft entsprechenden Soll-Schraubenspannwinkels beläuft.

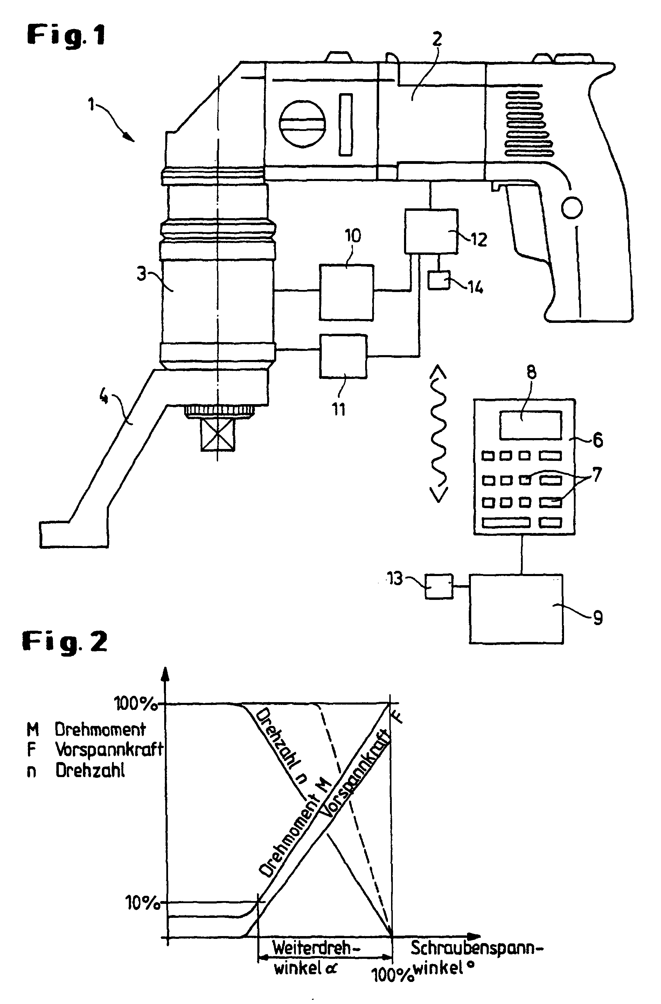

Aus Fig. 2 ist erkennbar, daß das Drehmoment M beim Drehen der Schraube bis zum Erreichen des Fügepunktes zunächst auf einem niedrigen Wert verharrt und erst nach Überschreiten von 10 % bis 20 % des der Soll-Vorspannkraft entsprechenden Drehmoments linear mit dem Schraubenspannwinkel ansteigt. Dementsprechend liegt der Ausgangspunkt für den Weiterdrehwinkel α bei 10 % bis 20 % des der Soll-Vorspannkraft entsprechenden Drehmoments und dieser Weiterdrehwinkel α beträgt entsprechend 20 % bis 80 % des der Soll-Vorspannkraft entsprechenden Soll-Schraubenspannwinkels, der sich sehr genau überwachen läßt.

Die Drehzahl n der Antriebseinheit 2 läßt sich erfindungsgemäß so steuern, daß sie sich mit kleiner werdender Differenz zwischen dem Soll-Drehmoment und dem Ist-Drehmoment oder zwischen dem Soll-Schraubenspannwinkel und dem Ist-Schraubenspannwinkel stetig vermindert und bei Erreichen des Soll-Drehmoments oder des Soll-Schraubenspannwinkels auf Null geht, d. h. daß die Antriebseinheit abgeschaltet wird. Diese Herabsetzung der Drehzahl der Antriebseinheit 2 kann, wie dargestellt, linear erfolgen, jedoch ist auch ein nicht linearer Verlauf einstellbar. Insbesondere ist es möglich, den Schraubvorgang zunächst mit hoher Drehzahl durchzuführen und erst nach Erreichen eines vorgebbaren Schraubmoments die Drehzahl herabzusetzen. Hierdurch ergibt sich eine Verkürzung des Schraubvorgangs. Diese Drehzahlsteuerung ist in Fig. 2 gestrichelt dargestellt.

Mit dem erfindungsgemäßen Kraftschrauber wird die Bedienung unter Ausschaltung von Fehlerquellen erheblich erleichtert, die Schraubenvorspannkraft läßt sich erheblich genauer erreichen und die Begrenzung der Rotationsenergie der Antriebseinheit in Abhängigkeit vom schon abgeforderten Moment des Schraubenfalls wird begrenzt, so daß sich eine Getriebe- und Materialschonung sowie eine weitgehende Unabhängigkeit des Abschaltmoments vom zeitlichen Momentverlauf des Schraubenfalls ergeben.

Des weiteren ist es auch möglich, an dem erfindungsgemäßen Kraftschrauber 1 die Abtasteinrichtung 10 für das Ist-Drehmoment so einzurichten, daß sie das Ist-Drehmoment einer bereits fest angezogenen Schraube durch geringfügiges Weiterdrehen mißt und die Auswerteelektronik 9 daraus ein Soll-Drehmoment und/oder einen Soll-Schraubenspannwinkel für ein weiteres Anziehen der Schraube auf einen den eingegebenen Daten entsprechenden Wert bewirkt.

## Patentansprüche

1. - Kraftschrauber (1) mit
- einer Antriebseinheit (2),
- einer Eingabeelektronik (6)
- einer Abtasteinrichtung (10) für das Ist-Drehmoment,
- einer Abtasteinrichtung (11) für den Ist-Schraubenspannwinkel und
- einer Steuer- und Abschalteinrichtung (12) zum Steuern des Weiterdrehens der Antriebseinheit (2) bei Übereinstimmung des Ist-Drehmoments mit einem Soll-Drehmoment und zum Abschalten der Antriebseinheit (2) bei Ubereinstimmung des Ist-Schraubenspannwinkels mit dem Soll-Schraubenspannwinkel. wobei das Soll-Drehmoment, von dem ab das Weiterdrehen der Antriebseinheit (2) bis Erreichen des Soll-Schraubenspannwinkels gesteuert wird, auf einen Wert, der kleiner als das der Soll-Vorspannkraft entsprechende Drehmoment ist, eingestellt wird und ein Weiterdrehwinkel der Antriebseinheit (2) bis Erreichen des der Soll-Vorspannkraft entsprechenden Soll-Schraubenspannwinkels zum Abschalten der Antriebseinheit (2) dient,
**dadurch gekennzeichnet,**
- **daß** die Eingabeelektronik (6) zum Eingeben der Schraubengröße, der Materialgüte, der Gewindesteigung und der Klemmlänge eingerichtet ist,
- **daß** eine Auswerteelektronik (a) vorgesehen ist, die zum Ermitteln der Soll-Vorspannkraft aus der eingegebenen Schraubengröße, der Materialgüte und der Klemmlänge, zum Ermitteln des aus der Soll- Vorspannkraft und der Gewindesteigung resultierenden Soll-Drehmoments und zum Ermitteln des aus der Soll-Vorspannkraft und der Gewindesteigung resultierenden Soll-Schraubenspannwinkels eingerichtet, und
- **daß** der Weiterdrehwinkel der Antriebseinheit aus der Differenz zwischen dem Soll-Schraubenspannwinkel und dem dem eingestellten Soll-Drehmoment entsprechenden Schraubenspannwinkel ermittelt wird.

2. Kraftschrauber nach Anspruch 1, **dadurch gekennzeichnet, daß** das eingestellte Soll-Drehmoment gleich 10 % bis 20 % des der Soll-Vorspannkraft entsprechenden Drehmoments ist und sich der Weiterdrehwinkel auf 90 % bis 80 % des der Soll-Vorspannkraft entsprechenden Soll-Schraubenspannwinkels beläuft.

3. Kraftschrauber, nach Anspruch 1 oder 2 **dadurch gekennzeichnet, daß** die Steuer- und Abschalteinrichtung (12) zum stetigen Herabsetzen der Drehzahl der Antriebseinheit (2) bei kleiner werdender Differenz zwischen dem Soll-Schraubenspannwinkel und dem Ist-Schraubenspannwinkel und zum Abschalten der Antriebseinheit (2) bei Übereinstimmung des Ist-Schraubenspannwinkels mit dem Soll-Schraubenspannwinkel eingerichtet ist.

4. Kraftschrauber nach einem der Ansprüche 1 bis 3, bei dem
- die Abtastvorrichtung (10, 11) für das Ist-Drehmoment dazu geignet ist, das Ist-Drehmoment einer bereits eingeschraubten Schraube durch geringfügiges Weiterdrehen zu messen und die Auswerteelektronik (9) daraus ein Soll-Drehmoment und/oder einen Soll-Schraubenspannwinkel für ein weiteres Ausziehen der Schraube auf einen den eingegebenen Daten entsprechenden Wert ermitteln kann.

5. Kraftschrauber nach Anspruch 1, 2, 3 oder 4, **dadurch gekennzeichnet, daß** die Auswerteelektronik (9) und die Steuer und Abschalteinrichtung (12) in die Antriebseinheit (2) integriert sind, während die Eingabeelektronik (6) als unabhängiges Steuergerät ausgebildet ist und auf die Auswerteelektronik (9) kabelfrei mit unidirektionaler Fernübertragung (13) der Daten wirkt.

6. Kraftschrauber nach Anspruch 5, **dadurch gekennzeichnet, daß** die Fernübertragung (13) als unidirektionale Infrarotstrecke gestaltet ist und ein Infrarotsignalempfänger (14) an der Antriebseinheit (2) angeordnet ist.

7. Kraftschrauber nach Anspruch 1, 2, 3 oder 4 **dadurch gekennzeichnet, daß** die Steuer- und Abschalteinrichtung (12) in die Antriebseinheit (2) integriert ist, während die Eingabeelektronik (6) und die Auswerteelektronik (9) als unabhängiges Steuergerät ausgebildet sind und auf die Steuer und Abschalteinrichtung (12) kabelfrei mit bidirektionaler Fernübertragung (13) der Daten wirken.

8. Kraftschrauber nach Anspruch 7, **dadurch gekennzeichnet, daß** die Eingabeelektronik (6) und die Auswerteelektronik (9) in einen tragbaren Rechner mit bidirektionaler IrDA-Schnittstelle (13) mit Infrarotübertragung integriert sind und eine entsprechende Schnittstelle (14) an der Antriebseinheit (2) angeordnet ist.

9. Kraftschrauber nach einem oder mehreren der Ansprüche 1 bis 8, **dadurch gekennzeichnet, daß** die Eingabeelektronik (6) ein Display (8) aufweist und zur Anzeige der eingegebenen Werte, der daraus ermittelten Werte und/oder des aktuellen Ist-Drehmomentverlaufs und/oder des aktuellen Ist-Drehwinkelverlaufs auf dem Display (8) eingerichtet ist.

## Claims

1. A power wrench (1) comprising:
- a drive unit (2),
- input electronics (6),
- a scanning means (10) for the actual torque,
- a scanning means (11) for the actual screw-tightening angle and
- a control and switch-off means (12) for controlling the further turning of the drive unit (2) when the actual torque matches a desired torque and for switching off the drive unit (2) when the actual screw-tightening angle matches the desired screw-tightening angle, the desired torque, from which the further turning of the drive unit (2) is controlled until the desired screw-tightening angle is reached, is set to a value smaller than the torque corresponding to the desired biasing force and a further-turning angle of the drive unit (2) until the desired screw-tightening angle corresponding to the desired biasing force is reached serves for switching off the drive unit (2),
**characterised in that**
- the input electronics (6) is set up to enter the screw size, the material quality, the thread pitch and the gripping length,
- that evaluation electronics (a) are provided which are set up to determine the desired biasing force from the entered screw size, the material quality and the gripping length, for determining the desired torque resulting from the desired biasing force and the thread pitch and for determining the desired screw-tightening angle resulting from the desired biasing force and the thread pitch, and
- that the further-turning angle of the drive unit is determined from the difference between the desired screw-tightening angle and the screw-tightening angle corresponding to the set desired torque.

2. A power wrench according to Claim 1, **characterised in that** the set desired torque is equal to 10% to 20% of the torque corresponding to the desired biasing force and the further-turning angle is 90% to 80% of the desired screw-tightening angle corresponding to the desired biasing force.

3. A power wrench according to Claim 1 or 2, **characterised in that** the control and switchoff means (12) is set up for constant reduction of the speed of rotation of the drive unit (2) as the difference between the desired screw-tightening angle and the actual screw-tightening angle becomes smaller and for switching off the drive unit (2) when the actual screw-tightening angle matches the desired screw-tightening angle.

4. A power wrench according to one of claims 1 to 3, in which
- the scanning device (10, 11) for the actual torque is suitable for measuring the actual torque of a screw which is already screwed in by slightly turning it further and the evaluation electronics (9) can determine a desired torque and/or a desired screw-tightening angle for further extracting the screw to a value corresponding to the entered data therefrom.

5. A power wrench according to Claim 1, 2, 3 or 4, **characterised in that** the evaluation electronics (9) and the control and switchoff means (12) are integrated into the drive unit (2), while the input electronics (6) are in the form of an independent control apparatus and act on the evaluation electronics (9) in cable-less manner with unidirectional remote transmission (13) of the data.

6. A power wrench according to Claim 5, **characterised in that** the remote transmission (13) is in the form of a unidirectional infrared section and an infrared signal receiver (14) is located on the drive unit (2).

7. A power wrench according to Claim 1, 2, 3 or 4, **characterised in that** the control and switchoff means (12) is integrated in the drive unit (2), while the input electronics (6) and the evaluation electronics (9) are in the form of an independent control apparatus and act on the control and switchoff means (12) in cable-less manner with bi-directional remote transmission (13) of the data.

8. A power wrench according to Claim 7, **characterised in that** the input electronics (6) and the evaluation electronics (9) are integrated in a portable computer with bi-directional IrDA interface (13) with infrared transmission and a corresponding interface (14) is provided on the drive unit (2).

9. A power wrench according to one or more of Claims 1 to 8, **characterised in that** the input electronics (6) have a display (8) and are set up to display the entered values, the values determined therefrom and/or the current path of the actual torque and/or the current path of the actual turning angle on the display (8).

## Revendications

1. Visseuse à moteur (1) comportant
- une unité d'entraînement (2),
- une électronique d'entrée (6),
- un dispositif de palpage (10) pour le couple de rotation réel,
- un dispositif de palpage (11) pour l'angle de serrage réel de la vis, et
- un dispositif de commande et de mise à l'arrêt (12) pour la commande de la poursuite de la rotation de l'unité d'entraînement (2) lorsque le couple de rotation réel coïncide avec un couple de rotation de consigne, et pour mettre à l'arrêt l'unité d'entraînement (2) lorsque l'angle de serrage réel de la vis coïncide avec l'angle de serrage de consigne de la vis, le couple de rotation de consigne, à partir duquel la poursuite de la rotation de l'unité d'entraînement (2) est commandée jusqu'à ce que soit atteint l'angle de serrage de consigne de la vis, étant réglé sur une valeur qui est inférieure au couple de rotation correspondant à la précontrainte de consigne, et un angle de poursuite de rotation de l'unité d'entraînement (2) jusqu'à obtention de l'angle de serrage de consigne de la vis correspondant à la précontrainte de consigne, sert à la mise à l'arrêt de l'unité d'entraînement (2),
**caractérisée en ce que**
- l'électronique d'entrée (6) est aménagée pour entrer la taille de la vis, le type du matériau, le pas du filetage et la longueur de serrage,
- il est prévu une électronique d'exploitation (a) qui est aménagée pour déterminer la précontrainte de consigne à partir de la taille de la vis, du type du matériau et de la longueur de serrage introduits, pour déterminer le couple de rotation de consigne résultant de la précontrainte de consigne et du pas du filetage, et pour déterminer l'angle de serrage de consigne de la vis, résultant de la précontrainte de consigne et du pas du filetage, et
- **en ce que** l'angle de poursuite de la rotation de l'unité d'entraînement est déterminé à partir de la différence entre l'angle de serrage de consigne de la vis et l'angle de serrage de la vis correspondant au couple de rotation de consigne réglé.

2. Visseuse à moteur selon la revendication 1, **caractérisée en ce que** le couple de rotation de consigne réglé est égal à 10 % à 20 % du couple de rotation correspondant à la précontrainte de consigne, et l'angle de poursuite de rotation correspond à 90 % à 80 % de l'angle de serrage de consigne de la vis correspondant à la précontrainte de consigne.

3. Visseuse à moteur selon la revendication 1 ou 2, **caractérisée en ce que** le dispositif de commande et de mise à l'arrêt (12) est aménagé pour la réduction permanente de la vitesse de rotation de l'unité d'entraînement (2) lorsque la différence entre l'angle de serrage de consigne de la vis et l'angle de serrage réel de la vis diminue, et pour la mise à l'arrêt de l'unité d'entraînement (2) lorsque l'angle de serrage réel de la vis et l'angle de serrage de consigne de la vis coïncident.

4. Visseuse à moteur selon l'une des revendications 1 à 3, dans laquelle
- le dispositif de palpage (10, 11) pour le coupe de rotation réel convient à la mesure du couple de rotation réel d'une vis déjà vissée par légère poursuite de la rotation, et l'électronique d'exploitation (9) peut déterminer à partir de celui-ci un couple de rotation de consigne et/ou un angle de serrage de consigne de la vis pour une poursuite de l'extraction de la vis, sur une valeur correspondant aux données entrées.

5. Visseuse à moteur selon la revendication 1, 2, 3 ou 4, **caractérisée en ce que** l'électronique d'exploitation (9) et le dispositif de commande et de mise à l'arrêt (12) sont intégrés dans l'unité d'entraînement (2), tandis que l'électronique d'entrée (6) est réalisée en tant qu'appareil de commande indépendant et agit sur l'électronique d'exploitation (9), sans câble avec télétransmission (13) unidirectionnelle des données.

6. Visseuse à moteur selon la revendication 5, **caractérisée en ce que** la télétransmission (13) est conçue en tant que parcours infrarouge unidirectionnel et un récepteur de signaux à infrarouge (4) est disposé sur l'unité d'entraînement (2).

7. Visseuse à moteur selon la revendication 2, 3 ou 4, **caractérisée en ce que** le dispositif de commande et de mise à l'arrêt (12) est intégré dans l'unité d'entraînement (2), tandis que l'électronique d'entrée (6) et l'électronique d'exploitation (9) sont réalisées en tant qu'appareil de commande indépendant et agissent sur le dispositif de commande et de mise à l'arrêt (12), sans câble, avec télétransmission (13) bidirectionnelle des données.

8. Visseuse à moteur selon la revendication 7, **caractérisée en ce que** l'électronique d'entrée (6) et l'électronique d'exploitation (9) sont intégrées dans un ordinateur portable avec interface IrDA (13) bidirectionnelle avec transmission infrarouge et une interface (14) correspondante est disposée sur l'unité d'entraînement (2).

9. Visseuse à moteur selon une ou plusieurs des revendications 1 à 8, **caractérisée en ce que** l'électronique d'entrée (7) comporte un écran (8) et est aménagée pour l'affichage des valeurs entrées, des valeurs déterminées à partir de celles-ci et/ou de la courbe actuelle du couple de rotation et/ou de la courbe actuelle de l'angle réel de rotation sur l'écran (8).
